# EUROPÄISCHE PATENTSCHRIFT

(11) **EP 3 782 255 B1**
(45) Veröffentlichungstag und Bekanntmachung des Hinweises auf die Patenterteilung: **20.09.2023**
(21) Anmeldenummer: 18730313.6
(22) Anmeldetag: 05.06.2018
(51) Int. Cl.: H02J 3/00, H02J 3/30

(54) **ANORDNUNG UND VERFAHREN ZUR STABILISIERUNG EINES ELEKTRISCHEN ENERGIEVERSORGUNGSNETZES**
ARRANGEMENT AND METHOD FOR STABILIZING AN ELECTRICAL ENERGY SUPPLY NETWORK
AGENCEMENT ET PROCÉDÉ DE STABILISATION D'UN RÉSEAU D'ALIMENTATION ÉLECTRIQUE

(43) Veröffentlichungstag der Anmeldung: 24.02.2021
(73) Patentinhaber: Siemens Energy Global GmbH & Co. KG, 81739 München (DE)
(72) Erfinder: SPAHIC, Ervin, 91052 Erlangen (DE)
(86) Internationale Anmeldenummer: PCT/EP2018/064709
(87) Internationale Veröffentlichungsnummer: WO 2019/233556

(56) Entgegenhaltungen:
- WO-A1-03/007455
- WO-A1-2005/096467
- HARDAN F ET AL: "Application of a power-controlled flywheel drive for wind power conditioning in a wind/diesel power system", ELECTRICAL MACHINES AND DRIVES, 1999. NINTH INTERNATIONAL CONFERENCE O N (CONF. PUBL. NO. 468) CANTERBURY, UK 1-3 SEPT. 1, LONDON, UK,IEE, UK, 1. September 1999 (1999-09-01), Seiten 65-70, XP006502097, DOI: 10.1049/CP:19990992 ISBN: 978-0-85296-720-1

## Beschreibung

Durch den vermehrten Einsatz von Energieerzeugern, insbesondere von Windkraftanlagen oder Photovoltaikanlagen, die leistungselektronisch an Energieversorgungsnetze angeschlossen werden, und durch die zunehmende Reduktion konventioneller Kraftwerke wird der Betrieb elektrischer Energieversorgungsnetze schwieriger und mitunter gefährdet. Technische Ereignisse, die einen sicheren Netzbetrieb gefährden können, sind insbesondere eine mangelnde Blindleistungsbereitstellung zur Spannungsstabilität, eine nur kleine Kurzschlussleistung und nur kleine rotierende Massen zur Frequenzstabilisierung.

Aus der internationalen Patentanmeldung WO 03/007455 A1 sind ein Verfahren und ein System bekannt, um die Erzeugung von erneuerbarer Energie mit einem herkömmlichen Energienetz zu koordinieren. Dazu weist ein Konverter, der das Energienetz mit den erneuerbaren Energiequellen verbindet, eine Steuerung und eine rotierende Maschine auf, die Blindleistung bereitstellt.

Die internationalen Patentanmeldung WO 2005/096467 A1 offenbart eine elektrische Anlage mit einer rotierenden Synchronmaschine zur Stabilisierung eines Energieversorgungsnetzes. Die Synchronmaschine ist mit einem zentralen Gleichspannungsstrang verbindbar, an den ein Gleichstromspeicher angeschlossen ist.

Der Erfindung liegt demgemäß die Aufgabe zugrunde, eine Anordnung und ein Verfahren zur Stabilisierung eines elektrischen Energieversorgungsnetzes anzugeben.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Anordnung eine erste Einrichtung umfasst, die eine rotierende Masse aufweist und im Normalbetrieb des Energieversorgungsnetzes synchron zu einer Sollnetzfrequenz des Energieversorgungsnetzes mitrotiert, im Falle eines Kurzschlusses im Energieversorgungsnetz selbsttätig einen Strom in das Energieversorgungsnetz einspeist und im Falle einer Frequenzabweichung der Netzfrequenz des Energieversorgungsnetzes von der Sollnetzfrequenz selbsttätig seine Drehzahl anpasst, und die Anordnung eine an die erste Einrichtung angeschlossene erste Steuereinheit aufweist, die im Falle einer festgestellten Netzstörung einer vorgegebenen ersten Art die erste Einrichtung ansteuert und dadurch eine Blindleistungseinspeisung in das Energieversorgungsnetz durch die erste Einrichtung hervorruft.

Ein wesentlicher Vorteil der erfindungsgemäßen Anordnung ist darin zu sehen, dass diese eine gesteuerte Blindleistungseinspeisung durch die erste Einrichtung ermöglicht und somit zusätzlich zu der automatischen Stabilisierungsmaßnahme der ersten Einrichtung eine gesteuerte Stabilisierungsmaßnahme durchführen kann.

Bei der ersten Einrichtung handelt es sich vorzugsweise um eine im Phasenschieberbetrieb arbeitende Synchronmaschine, die im mechanischen Leerlauf arbeitet und lediglich Blindleistung aus dem Energieversorgungsnetz aufnimmt oder in dieses abgibt, sofern keine zusätzliche Ansteuerung durch die erste Steuereinheit stattfindet.

Vorteilhaft ist es, wenn die erste Steuereinheit im Falle einer festgestellten Netzstörung der ersten Art eine Erregerspannung an die erste Einrichtung anlegt und dadurch die Blindleistungseinspeisung durch die erste Einrichtung hervorruft.

Besonders vorteilhaft ist es, dass die Anordnung eine zweite Steuereinheit und eine zweite Einrichtung umfasst, die einen Umrichter und einen Energiespeicher aufweist und von der zweiten Steuereinheit angesteuert wird, wobei die zweite Steuereinheit im Falle einer festgestellten Netzstörung erster Art den Umrichter derart ansteuert, dass dieser Blindleistung, insbesondere die maximal mögliche Blindleistung, aus dem Umrichter in das Energieversorgungsnetz einspeist.

Bei der letztgenannten Ausführungsform ist es außerdem vorteilhaft, dass die zweite Steuereinheit zusätzlich aus dem Energiespeicher über den Umrichter Blindleistung in das Energieversorgungsnetz einspeist, wenn die von der ersten Einrichtung in das Energieversorgungsnetz eingespeiste Blindleistung deren Nennblindleistung entspricht.

Die erste Steuereinheit, die zweite Steuereinheit und/oder eine übergeordnete Steuereinrichtung stellen vorzugsweise eine Netzstörung erster Art fest, wenn ein erster Netzparameterwert einen vorgegebenen ersten Grenzwert überschreitet oder außerhalb eines vorgegebenen ersten Toleranzbereichs liegt.

Die zweite Steuereinheit ist vorzugsweise derart ausgestaltet, dass sie im Falle einer festgestellten Netzstörung zweiter Art aus dem Energiespeicher über den Umrichter einen maximal möglichen Wirkstrom in das Energieversorgungsnetz einspeist.

Bezüglich einer Netzstörung zweiter Art wird es als vorteilhaft angesehen, wenn die zweite Steuereinheit und/oder die übergeordnete Steuereinrichtung prüft, ob die zeitliche Änderung des ersten Netzparameterwerts über der Zeit einen vorgegebenen ersten Änderungsschwellenwert und die zeitliche Änderung eines zweiten Netzparameterwerts über der Zeit einen vorgegebenen zweiten Änderungsschwellenwert überschreitet, und die zweite Steuereinheit und/oder die übergeordnete Steuereinrichtung die Netzstörung zweiter Art feststellt, wenn die zeitliche Änderung des ersten Netzparameterwerts über der Zeit den vorgegebenen ersten Änderungsschwellenwert und/oder die zeitliche Änderung des zweiten Netzparameterwerts über der Zeit den vorgegebenen zweiten Änderungsschwellenwert überschreitet.

Auch ist es von Vorteil, wenn die zweite Steuereinheit oder die übergeordnete Steuereinrichtung eine Netzstörung dritter Art feststellt, wenn die Abweichung der Netzfrequenz von der Sollnetzfrequenz einen vorgegebenen Abweichungsschwellenwert überschreitet.

Im Falle einer Netzstörung dritter Art speist die zweite Steuereinheit vorzugsweise aus dem Energiespeicher über den Umrichter in das Energieversorgungsnetz einen Wirkstrom ein, dessen Höhe von der Abweichung der Netzfrequenz von der Sollnetzfrequenz abhängt.

Der erste Netzparameterwert ist vorzugsweise ein Netzspannungswert, der die jeweilige Netzspannung des Energieversorgungsnetzes angibt.

Der zweite Netzparameterwert ist vorzugsweise ein Frequenzwert, der die jeweilige Netzfrequenz des Energieversorgungsnetzes angibt.

Der ersten und zweiten Steuereinheit ist vorzugsweise eine Steuereinrichtung übergeordnet. Die Steuereinrichtung führt vorzugsweise eine (koordinierte) Ansteuerung der ersten und zweiten Steuereinheit in Abhängigkeit von zumindest dem ersten und/oder zweiten Netzparameterwert durch.

Bei einer bevorzugten Ausgestaltung ist vorgesehen, dass die erste Steuereinheit, die zweite Steuereinheit und die übergeordnete Steuereinrichtung separate Baueinheiten sind, wobei die übergeordnete Steuereinrichtung mit der ersten und zweiten Steuereinheit verbunden ist.

Alternativ wird es als vorteilhaft angesehen, wenn die erste Steuereinheit, die zweite Steuereinheit und die übergeordnete Steuereinrichtung in derselben Baueinheit untergebracht sind, insbesondere die erste und zweite Steuereinheit als interne Module in die übergeordnete Steuereinrichtung integriert sind.

Die Aufgabe wird weiterhin gelöst durch ein Verfahren nach Anspruch 10.

Die Erfindung bezieht sich darüber hinaus auf ein Verfahren zum Stabilisieren eines elektrischen Energieversorgungsnetzes. Erfindungsgemäß ist vorgesehen, dass geprüft wird, ob eine Netzstörung einer vorgegebenen ersten Art vorliegt, im Falle einer festgestellten Netzstörung erster Art eine erste Einrichtung, die eine rotierende Masse aufweist und im Normalbetrieb des Energieversorgungsnetzes synchron zu einer Sollnetzfrequenz des Energieversorgungsnetzes mitrotiert, im Falle eines Kurzschlusses im Energieversorgungsnetz selbsttätig einen Strom in das Energieversorgungsnetz einspeist und im Falle einer Frequenzabweichung der Netzfrequenz von der Sollnetzfrequenz selbsttätig seine Drehzahl anpasst, derart angesteuert wird, dass diese Blindleistung in das Energieversorgungsnetz einspeist.

Bezüglich der Vorteile des erfindungsgemäßen Verfahrens sei auf die obigen Ausführungen im Zusammenhang mit der erfindungsgemäßen Anordnung verwiesen.

Vorteilhaft ist es, dass im Falle einer festgestellten Netzstörung erster Art eine zweite Einrichtung, die einen Umrichter und einen Energiespeicher aufweist, derart angesteuert wird, dass diese Blindleistung, insbesondere die maximal mögliche Blindleistung, aus dem Umrichter in das Energieversorgungsnetz einspeist.

Auch ist es vorteilhaft, dass die zweite Einrichtung zusätzlich aus dem Energiespeicher über den Umrichter Blindleistung in das Energieversorgungsnetz einspeist, wenn die von der ersten Einrichtung in das Energieversorgungsnetz eingespeiste Blindleistung deren Nennblindleistung entspricht.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung zur Stabilisierung eines elektrischen Energieversorgungsnetzes,
- Figur 2: beispielhaft anhand eines Ablaufdiagramms die Arbeitsweise der Anordnung gemäß Figur 1,
- Figur 3: ein zweites Ausführungsbeispiel für eine erfindungsgemäße Anordnung zur Stabilisierung eines elektrischen Energieversorgungsnetzes, wobei die Anordnung gemäß Figur 3 ohne eine übergeordnete Steuereinrichtung auskommt, und
- Figur 4: ein drittes Ausführungsbeispiel für eine erfindungsgemäße Anordnung zur Stabilisierung eines elektrischen Energieversorgungsnetzes, wobei die Anordnung gemäß Figur 4 eine übergeordnete Steuereinrichtung aufweist, die unmittelbar mit einer ersten und einer zweiten Einrichtung der Anordnung zusammenarbeitet bzw. diese ansteuert.

In den Figuren werden der Übersicht halber für identische oder vergleichbare Komponenten stets dieselben Bezugszeichen verwendet.

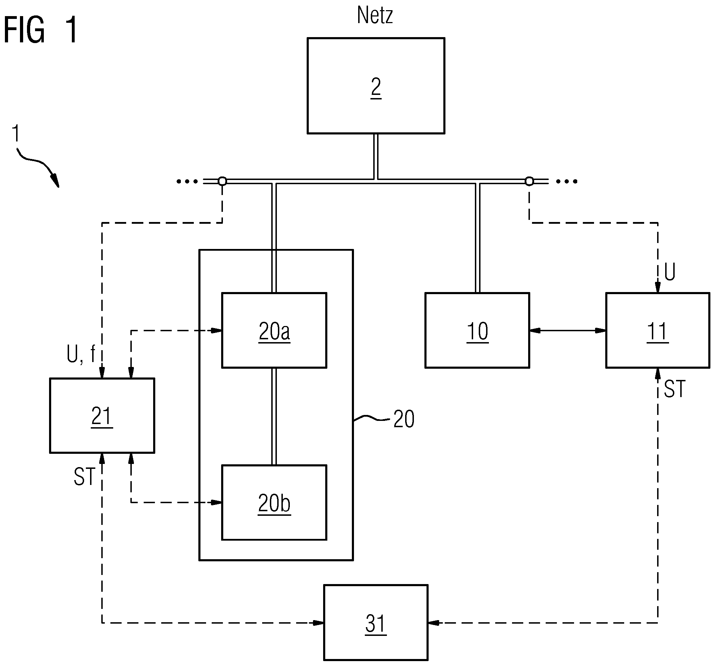

Die Figur 1 zeigt eine Anordnung 1, die zur Stabilisierung eines elektrischen Energieversorgungsnetzes 2 dient.

Die Anordnung 1 umfasst eine erste Einrichtung 10, die eine rotierende Masse aufweist und im Normalbetrieb des Energieversorgungsnetzes 2 synchron zu einer Sollnetzfrequenz des Energieversorgungsnetzes 2 mitrotiert, im Falle eines Kurzschlusses im Energieversorgungsnetz 2 selbsttätig einen Strom in das Energieversorgungsnetz 2 einspeist und im Falle einer Frequenzabweichung der Netzfrequenz des Energieversorgungsnetzes 2 von der Sollnetzfrequenz selbsttätig seine Drehzahl anpasst. Bei der ersten Einrichtung 10 handelt es sich vorzugsweise um eine im Phasenschieberbetrieb arbeitende Synchronmaschine, also um eine Synchronmaschine, die mechanisch im Leerlauf arbeitet und lediglich Blindleistung aus dem Energieversorgungsnetz 2 aufnehmen oder in dieses abgeben kann. Derartige Einrichtungen werden fachsprachlich auch als rotierende Phasenschieber bzw. "synchronous condenser" bezeichnet. Die erste Einrichtung 10 wird von einer ersten Steuereinheit 11 angesteuert.

Die Anordnung 1 gemäß Figur 1 umfasst darüber hinaus eine zweite Einrichtung 20, die einen Umrichter 20a und einen Energiespeicher 20b aufweist und von einer zweiten Steuereinheit 21 angesteuert wird.

Die erste Steuereinheit 11 und die zweite Steuereinheit 21 stehen bei dem Ausführungsbeispiel gemäß Figur 1 mit einer übergeordneten Steuereinrichtung 31 in Verbindung.

Bei dem Ausführungsbeispiel gemäß Figur 1 wird beispielhaft davon ausgegangen, dass die erste Steuereinheit 11 zur Ansteuerung der ersten Einrichtung 10 einen die jeweilige Netzspannung des Energieversorgungsnetzes 2 angebenden Netzspannungswert U auswertet; die zweite Steuereinheit 21 und die übergeordnete Steuereinrichtung 31 werten zusätzlich zu dem Netzspannungswert U einen der jeweiligen Netzfrequenz des Energieversorgungsnetzes 2 angebenden Frequenzwert f aus.

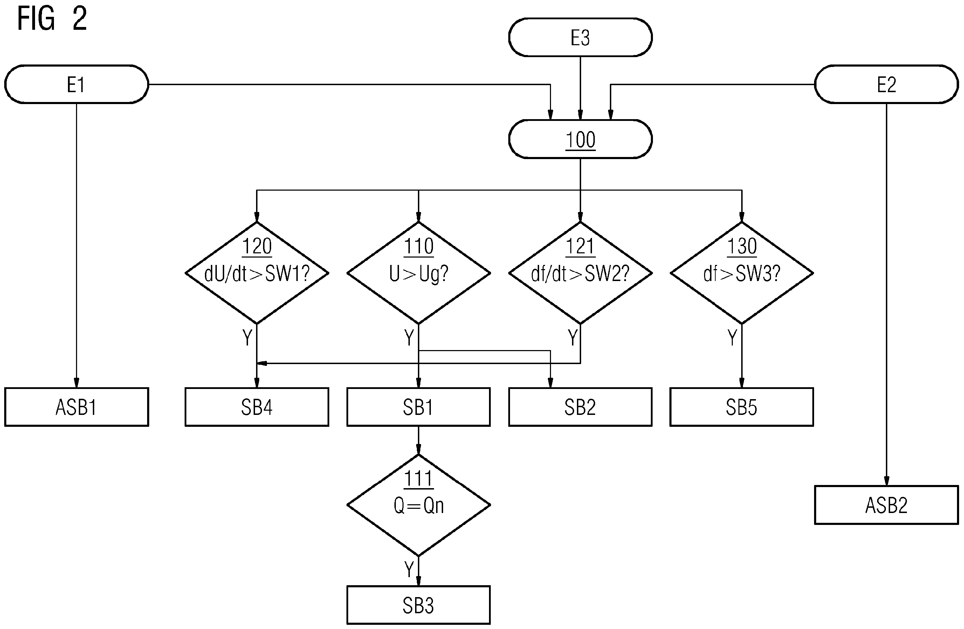

Ein bevorzugtes Arbeitsverfahren der Anordnung 1 gemäß Figur 1 wird nachfolgend anhand eines Ablaufdiagramms beispielhaft im Zusammenhang mit der Figur 2 erläutert:
In einem Messschritt 100 werden der Netzspannungswert U und der Frequenzwert f erfasst und mit Blick auf das Vorliegen einer Netzstörung erster Art, einer Netzstörung zweiter Art und/oder einer Netzstörung dritter Art untersucht.

In einem Prüfschritt 110 wird mit Blick auf eine etwaige Netzstörung erster Art geprüft, ob der Netzspannungswert U einen vorgegebenen ersten Grenzwert Ug überschreitet oder außerhalb eines vorgegebenen ersten Toleranzbereichs liegt. Ist dies der Fall (siehe Pfad Y), so wird die erste Steuereinheit 11 im Rahmen einer gesteuerten Stabilisierungsmaßnahme SB1 eine Erregerspannung an die erste Einrichtung 10 anlegen und dadurch gesteuert eine Blindleistungseinspeisung durch die erste Einrichtung 10 in das Energieversorgungsnetz 2 hervorrufen.

In einer dazu parallelen gesteuerten Stabilisierungsmaßnahme SB2 wird die zweite Steuereinheit 21 die zweite Einrichtung 20 derart ansteuern, dass deren Umrichter 20a Blindleistung, insbesondere die maximal mögliche Blindleistung, aus dem Umrichter 20a in das Energieversorgungsnetz 2 einspeist.

Wird in einem Prüfschritt 111 darüber hinaus festgestellt, dass die von der ersten Einrichtung 10 in das Energieversorgungsnetz 2 eingespeiste Blindleistung Q deren Nennblindleistung Qn entspricht, also die erste Einrichtung 10 nicht mehr Blindleistung Q einspeisen kann als sie aktuell einspeist (siehe Pfad Y), so wird die zweite Steuereinheit 21 zusätzlich aus dem Energiespeicher 20b über den Umrichter 20a im Rahmen einer gesteuerten Stabilisierungsmaßnahme SB3 weitere Blindleistung in das Energieversorgungsnetz 2 einspeisen.

Mit Blick auf die Überprüfung einer Netzstörung zweiter Art wird in einem Prüfschritt 120 festgestellt, ob die zeitliche Änderung dU/dt des Netzspannungswerts U über der Zeit t einen vorgegebenen ersten Änderungsschwellenwert SW1 überschreitet. Ist dies der Fall (siehe Pfad Y), so wird im Rahmen einer gesteuerten Stabilisierungsmaßnahme SB4 die zweite Steuereinheit 21 die zweite Einrichtung 20 derart ansteuern, dass diese maximalen Wirkstrom aus dem Energiespeicher 20b in das Energieversorgungsnetz einspeist.

Die gesteuerte Stabilisierungsmaßnahme SB3 wird die zweite Steuereinheit 21 ebenfalls durchführen, wenn in einem parallelen Prüfschritt 121 festgestellt wird (siehe Pfad Y), dass die zeitliche Änderung df/dt des Frequenzwerts f über der Zeit t einen vorgegebenen zweiten Änderungsschwellenwert SW2 überschreitet.

Die Überprüfung auf das Vorliegen einer Netzstörung zweiter Art erfolgt somit im Rahmen zweier Prüfschritte 120 und 121, die parallel oder nacheinander durchgeführt werden.

Mit Blick auf das etwaige Vorliegen einer Netzstörung dritter Art wird ein Prüfschritt 130 durchgeführt, in dem geprüft wird, ob die Abweichung df der Netzfrequenz von der Sollnetzfrequenz fs (df=f-fs) einen vorgegebenen Abweichungsschwellenwert SW3 überschreitet. Ist dies der Fall (siehe Pfad Y), so wird im Rahmen einer gesteuerten Stabilisierungsmaßnahme SB5 die zweite Steuereinheit 21 die zweite Einrichtung 20 derart ansteuern, dass diese einen Wirkstrom in das Energieversorgungsnetz 2 einspeist, dessen Höhe von der Abweichung df der Netzfrequenz von der Sollnetzfrequenz fs abhängt.

In dem Ablaufdiagramm gemäß Figur 2 sind darüber hinaus drei Netzereignisse E1, E2 und E3 eingezeichnet, von denen das Netzereignis E1 ein Kurzschluss im Energieversorgungsnetz 2, das Netzereignis E2 eine Frequenzabweichung der Netzfrequenz von der Sollnetzfrequenz fs und das Netzereignis E3 eine Spannungsabweichung von einer Sollnetzspannung ist.

Im Falle eines Netzereignisses E1, also im Falle eines Kurzschlusses im Energieversorgungsnetz 2, wird die erste Einrichtung 10, bei der es sich wie erwähnt vorzugsweise um eine im Phasenschieberbetrieb arbeitende Synchronmaschine handelt, im Rahmen einer automatischen bzw. selbsttätigen Stabilisierungsmaßnahme ASB1 automatisch einen Strom in das Energieversorgungsnetz 2 einspeisen.

Darüber hinaus wird im Falle eines Netzereignisses E1 nach Durchführung des Messschritts 100 geprüft, ob die Kriterien für eine Netzstörung erster, zweiter und/oder dritter Art vorliegen, und ggf. werden die entsprechenden gesteuerten Stabilisierungsmaßnahmen SB1 bis SB5 durchgeführt, wie dies oben beispielhaft erläutert worden ist.

Im Falle einer Frequenzabweichung im Energieversorgungsnetz 2, also im Falle eines Netzereignisses E2, wird die erste Einrichtung 10 im Rahmen einer automatischen bzw. selbsttätigen Stabilisierungsmaßnahme ASB2 automatisch seine Drehzahl anpassen. Darüber hinaus wird nach Durchführung des Messschritts 100 geprüft, ob eine Netzstörung erster, zweiter oder dritter Art vorliegt und es werden ggf. die gesteuerten Stabilisierungsmaßnahmen SB1 bis SB5 durchgeführt, wie dies oben erläutert worden ist.

Entsprechendes gilt für den Fall einer Spannungsabweichung bzw. eines Netzereignisses E3; in diesem Falle wird eine Überprüfung auf das Vorliegen einer Netzstörung erster, zweiter oder dritter Art durchgeführt und es werden ggf. die entsprechenden gesteuerten Stabilisierungsmaßnahmen SB1 bis SB5 durchgeführt, wie dies oben beschrieben worden ist.

Bei dem Ausführungsbeispiel gemäß Figur 1 erfolgt ein koordinierter Betrieb der beiden Steuereinheiten 11 und 21 durch eine entsprechende Ansteuerung mittels der übergeordneten Steuereinrichtung 31, die vorzugsweise die Messschritte 100 und die Prüfschritte 110, 120, 121, 130 und 111 durchführt und in Abhängigkeit von dem Prüfergebnis entsprechende Steuersignale ST zur Ansteuerung der Steuereinheiten 11 und 21 und damit zur Ansteuerung der beiden Einrichtungen 10 und 20 ausgibt.

Da bei dem Ausführungsbeispiel gemäß Figur 1 die erste Steuereinheit 11 mit den Netzspannungswerten U beaufschlagt ist und die zweite Steuereinheit 21 sowohl mit den Netzspannungswerten U als auch mit den Frequenzwerten f beaufschlagt ist, können die beiden Steuereinheiten 11 und 21 die in der Figur 2 gezeigten Prüfschritte und die gesteuerten Stabilisierungsmaßnahmen mit Ausnahme des Prüfschrittes 111 und der gesteuerten Stabilisierungsmaßnahme SB3 auch im Falle eines Ausfalls der übergeordneten Steuereinrichtung 31 vornehmen.

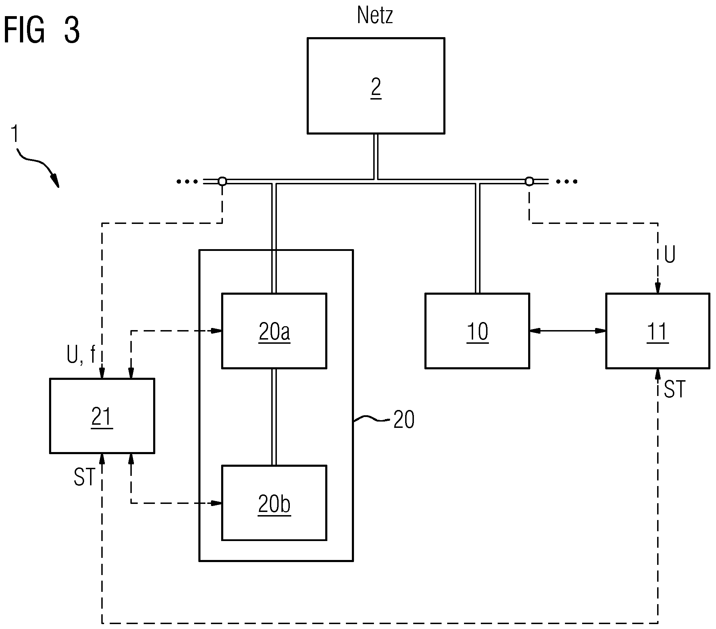

Die Figur 3 zeigt eine Ausführungsvariante der Anordnung 1 gemäß Figur 1. Bei der Ausführungsvariante gemäß Figur 3 fehlt die übergeordnete Steuereinrichtung 31, so dass die gesteuerten Stabilisierungsmaßnahmen SB1 bis SB5 von den beiden Steuereinheiten 11 und 21 selbsttätig durchgeführt werden, wenn Netzstörungen erster, zweiter und dritter Art festgestellt werden. Mit Blick auf den Prüfschritt 111 sind die beiden Steuereinheiten 11 und 21 unmittelbar miteinander verbunden, damit die Arbeitsbelastung bzw. der Umfang der Einspeisung von Blindleistung Q der ersten Einrichtung 10 von der zweiten Steuereinheit 21 berücksichtigt werden kann.

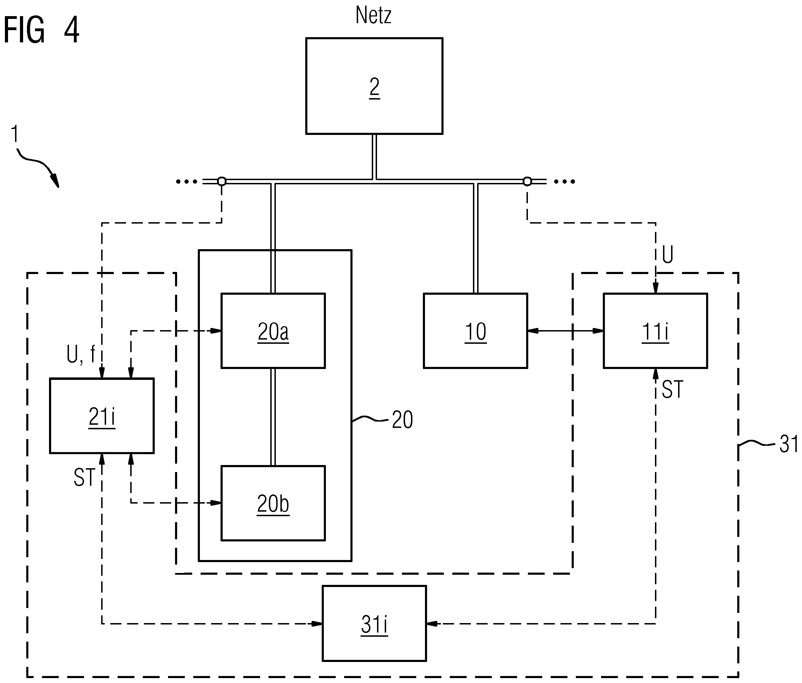

Die Figur 4 zeigt eine weitere Ausführungsvariante für die Anordnung 1 gemäß Figur 1. Bei dieser Ausführungsvariante ist lediglich eine übergeordnete Steuereinrichtung 31 vorhanden, die die erste Einrichtung 10 und die zweite Einrichtung 20 mittels einer internen bzw. eigenen ersten und einer internen bzw. eigenen zweiten Steuereinheit 111 und 21i unmittelbar ansteuert, beispielsweise mit Hilfe eines Zentralmoduls 31i. Die in den Figuren 1 und 3 vorhandenen externen Steuereinheiten 11 und 21 fehlen bei dem Ausführungsbeispiel gemäß Figur 4. Im Übrigen gelten die obigen Erläuterungen, insbesondere mit Blick auf die Figur 2 auch bei dem Ausführungsbeispiel gemäß Figur 4 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie er in den Ansprüchen definiert ist, zu verlassen

### Bezugszeichenliste

- 1: Anordnung
- 2: Energieversorgungsnetz
- 10: erste Einrichtung
- 11: Steuereinheit
- 11i: Steuereinheit
- 20: zweite Einrichtung
- 20a: Umrichter
- 20b: Energiespeicher
- 21: Steuereinheit
- 21i: Steuereinheit
- 31: Steuereinrichtung
- 31i: Zentralmodul
- 100: Messschritt
- 110: Prüfschritt
- 111: Prüfschritt
- 120: Prüfschritt
- 121: Prüfschritt
- 130: Prüfschritt

- ASB1: automatische Stabilisierungsmaßnahme
- ASB2: automatische Stabilisierungsmaßnahme
- df: Abweichung
- df/dt: zeitliche Änderung
- dU/dt: zeitliche Änderung
- E1: Netzereignis
- E2: Netzereignis
- E3: Netzereignis
- f: Frequenzwert
- Q: Blindleistung
- Qn: Nennblindleistung
- SB1: gesteuerte Stabilisierungsmaßnahme
- SB2: gesteuerte Stabilisierungsmaßnahme
- SB3: gesteuerte Stabilisierungsmaßnahme
- SB4: gesteuerte Stabilisierungsmaßnahme
- SB5: gesteuerte Stabilisierungsmaßnahme
- ST: Steuersignal
- SW1: Änderungsschwellenwert
- SW2: Änderungsschwellenwert
- SW3: Abweichungsschwellenwert
- t: Zeit
- U: Netzspannungswert
- Ug: Grenzwert
- Y: Pfad

## Patentansprüche

1. Anordnung (1) zur Stabilisierung eines elektrischen Energieversorgungsnetzes (2), wobei
- die Anordnung (1) eine erste Einrichtung (10) umfasst, die eine rotierende Masse aufweist und im Normalbetrieb des Energieversorgungsnetzes (2) synchron zu einer Sollnetzfrequenz des Energieversorgungsnetzes (2) mitrotiert, im Falle eines Kurzschlusses im Energieversorgungsnetz (2) selbsttätig einen Strom in das Energieversorgungsnetz (2) einspeist und im Falle einer Frequenzabweichung der Netzfrequenz (f) des Energieversorgungsnetzes (2) von der Sollnetzfrequenz selbsttätig seine Drehzahl anpasst, und
- die Anordnung (1) eine an die erste Einrichtung (10) angeschlossene erste Steuereinheit (11, 11i) aufweist, die dazu angepasst ist im Falle einer festgestellten Netzstörung einer vorgegebenen ersten Art die erste Einrichtung (10) anzusteuern und dadurch eine Blindleistungseinspeisung in das Energieversorgungsnetz (2) durch die erste Einrichtung (10) hervorzurufen,
**dadurch gekennzeichnet, dass**
- die Anordnung (1) eine zweite Steuereinheit (21, 21i) und eine zweite Einrichtung (20) umfasst, die einen Umrichter (20a) und einen Energiespeicher (20b) aufweist und von der zweiten Steuereinheit (21, 21i) angesteuert wird,
- wobei die zweite Steuereinheit (21, 21i) dazu angepasst ist im Falle einer festgestellten Netzstörung erster Art den Umrichter (20a) derart anzusteuern, dass dieser Blindleistung (Q), insbesondere die maximal mögliche Blindleistung (Q), aus dem Umrichter (20a) in das Energieversorgungsnetz (2) einspeist,
- wobei die zweite Steuereinheit (21, 21i) zusätzlich dazu angepasst ist aus dem Energiespeicher (20b) über den Umrichter (20a) Blindleistung (Q) in das Energieversorgungsnetz (2) einzuspeisen, wenn die von der ersten Einrichtung (10) in das Energieversorgungsnetz (2) einspeiste Blindleistung (Q) deren Nennblindleistung (Qn) entspricht.

2. Anordnung (1) nach Anspruch 1,
**dadurch gekennzeichnet, dass** die erste Steuereinheit (11, 11i) dazu angepasst ist im Falle einer festgestellten Netzstörung der ersten Art eine Erregerspannung an die erste Einrichtung (10) anzulegen und dadurch die Blindleistungseinspeisung durch die erste Einrichtung (10) hervorzurufen.

3. Anordnung (1) nach einem der voranstehenden Ansprüche, **dadurch gekennzeichnet, dass** die erste Steuereinheit (11, 11i), die zweite Steuereinheit (21, 21i) und/oder eine übergeordnete Steuereinrichtung (31) dazu angepasst sind eine Netzstörung erster Art festzustellen, wenn ein erster Netzparameterwert einen vorgegebenen ersten Grenzwert überschreitet oder außerhalb eines vorgegebenen ersten Toleranzbereichs liegt.

4. Anordnung (1) nach einem der voranstehenden Ansprüche, **dadurch gekennzeichnet, dass** die zweite Steuereinheit (21, 21i) dazu angepasst ist im Falle einer festgestellten Netzstörung zweiter Art aus dem Energiespeicher (20b) über den Umrichter (20a) einen maximal möglichen Wirkstrom in das Energieversorgungsnetz (2) einzuspeisen.

5. Anordnung (1) nach einem der voranstehenden Ansprüche,
**dadurch gekennzeichnet, dass**
- die zweite Steuereinheit (21, 21i) und/oder die übergeordnete Steuereinrichtung (31) dazu angepasst ist zu prüfen, ob die zeitliche Änderung des ersten Netzparameterwerts über der Zeit einen vorgegebenen ersten Änderungsschwellenwert und die zeitliche Änderung eines zweiten Netzparameterwerts über der Zeit einen vorgegebenen zweiten Änderungsschwellenwert überschreitet, und
- die zweite Steuereinheit (21, 21i) und/oder die übergeordnete Steuereinrichtung (31) dazu angepasst ist die Netzstörung zweiter Art festzustellen, wenn die zeitliche Änderung des ersten Netzparameterwerts über der Zeit den vorgegebenen ersten Änderungsschwellenwert und/oder die zeitliche Änderung des zweiten Netzparameterwerts über der Zeit den vorgegebenen zweiten Änderungsschwellenwert überschreitet.

6. Anordnung (1) nach einem der voranstehenden Ansprüche, **dadurch gekennzeichnet, dass**
- die zweite Steuereinheit (21, 21i) oder die übergeordnete Steuereinrichtung (31) dazu angepasst ist eine Netzstörung dritter Art festzustellen, wenn die Abweichung der Netzfrequenz von der Sollnetzfrequenz einen vorgegebenen Abweichungsschwellenwert überschreitet und
- die zweite Steuereinheit (21, 21i) dazu angepasst ist im Falle einer Netzstörung dritter Art aus dem Energiespeicher (20b) über den Umrichter (20a) in das Energieversorgungsnetz (2) einen Wirkstrom einzuspeisen, dessen Höhe von der Abweichung der Netzfrequenz von der Sollnetzfrequenz abhängt.

7. Anordnung (1) nach einem der voranstehenden Ansprüche, **dadurch gekennzeichnet, dass**
- der erste Netzparameterwert ein Netzspannungswert (U) ist, der die jeweilige Netzspannung des Energieversorgungsnetzes (2) angibt, und/oder
- der zweite Netzparameterwert ein Frequenzwert (f) ist, der die jeweilige Netzfrequenz des Energieversorgungsnetzes (2) angibt.

8. Anordnung (1) nach einem der voranstehenden Ansprüche, **dadurch gekennzeichnet, dass**
- der ersten und zweiten Steuereinheit (11, 11i, 21, 21i) eine Steuereinrichtung (31) übergeordnet ist und
- die Steuereinrichtung (31) dazu angepasst ist die Ansteuerung der ersten und zweiten Steuereinheit (11, 11i, 21, 21i) in Abhängigkeit von zumindest dem ersten und/oder zweiten Netzparameterwert durchzuführen.

9. Anordnung (1) nach einem der voranstehenden Ansprüche, **dadurch gekennzeichnet, dass**
- die erste Steuereinheit (11), die zweite Steuereinheit (21) und die übergeordnete Steuereinrichtung (31) separate Baueinheiten sind, wobei die übergeordnete Steuereinrichtung (31) mit der ersten und zweiten Steuereinheit (11, 21) verbunden ist, oder
- die erste Steuereinheit (11i) und die zweite Steuereinheit (21i) Bestandteile einer übergeordneten Steuereinrichtung (31) sind.

10. Verfahren zum Stabilisieren eines elektrischen Energieversorgungsnetzes (2),
**dadurch gekennzeichnet, dass**
- geprüft wird, ob eine Netzstörung einer vorgegebenen ersten Art vorliegt,
- im Falle einer festgestellten Netzstörung erster Art eine erste Einrichtung (10), die eine rotierende Masse aufweist und im Normalbetrieb des Energieversorgungsnetzes (2) synchron zu einer Sollnetzfrequenz des Energieversorgungsnetzes (2) mitrotiert, im Falle eines Kurzschlusses im Energieversorgungsnetz (2) selbsttätig einen Strom in das Energieversorgungsnetz (2) einspeist und im Falle einer Frequenzabweichung der Netzfrequenz von der Sollnetzfrequenz selbsttätig seine Drehzahl anpasst, derart angesteuert wird, dass diese Blindleistung (Q) in das Energieversorgungsnetz (2) einspeist,
- im Falle einer festgestellten Netzstörung erster Art eine zweite Einrichtung (20), die einen Umrichter (20a) und einen Energiespeicher (20b) aufweist, derart angesteuert wird, dass diese Blindleistung (Q), insbesondere die maximal mögliche Blindleistung (Q), aus dem Umrichter (20a) in das Energieversorgungsnetz (2) einspeist, und
- die zweite Einrichtung (20) zusätzlich aus dem Energiespeicher (20b) über den Umrichter (20a) Blindleistung (Q) in das Energieversorgungsnetz (2) einspeist, wenn die von der ersten Einrichtung (10) in das Energieversorgungsnetz (2) eingespeiste Blindleistung (Q) deren Nennblindleistung (Qn) entspricht.

## Claims

1. Arrangement (1) for stabilizing an electrical power supply grid (2), wherein
- the arrangement (1) comprises a first device (10) which has a rotating mass and, during normal operation of the power supply grid (2), rotates together with said rotating mass in sync with a setpoint grid frequency of the power supply grid (2), automatically feeds a current into the power supply grid (2) in the event of a short circuit in the power supply grid (2), and automatically adjusts its rotational speed in the event that the grid frequency (f) of the power supply grid (2) deviates from the setpoint grid frequency, and
- the arrangement (1) has a first control unit (11, 11i) which is connected to the first device (10) and which is adapted to control the first device (10) and thereby cause the first device (10) to feed a reactive power into the power supply grid (2) in the event that a grid disturbance of a predefined first type is identified,
**characterized in that**
- the arrangement (1) comprises a second control unit (21, 21i) and a second device (20) which has a converter (20a) and an energy store (20b) and is controlled by the second control unit (21, 21i),
- wherein the second control unit (21, 21i) is adapted to control the converter (20a) in such a way that the latter feeds reactive power (Q), in particular the maximum possible reactive power (Q), into the power supply grid (2) from the converter (20a) in the event that a grid disturbance of the first type is identified,
- wherein the second control unit (21, 21i) is additionally adapted to feed reactive power (Q) into the power supply grid (2) from the energy store (20b) via the converter (20a) if the reactive power (Q) fed into the power supply grid (2) by the first device (10) corresponds to the nominal reactive power (Qn) thereof.

2. Arrangement (1) according to Claim 1,
**characterized in that**
the first control unit (11, 11i) is adapted to apply an excitation voltage to the first device (10) and thereby cause the first device (10) to feed in reactive power in the event that a grid disturbance of the first type is identified.

3. Arrangement (1) according to either of the preceding claims,
**characterized in that**
the first control unit (11, 11i), the second control unit (21, 21i) and/or a superordinate control device (31) are adapted to identify a grid disturbance of the first type if a first grid parameter value exceeds a predefined first limit value or lies outside of a predefined first tolerance range.

4. Arrangement (1) according to one of the preceding claims, **characterized in that**
the second control unit (21, 21i) is adapted to feed a maximum possible active current into the power supply grid (2) from the energy store (20b) via the converter (20a) in the event that a grid disturbance of a second type is identified.

5. Arrangement (1) according to one of the preceding claims, **characterized in that**
- the second control unit (21, 21i) and/or the superordinate control device (31) are/is adapted to check whether the temporal change in the first grid parameter value over time exceeds a predefined first change threshold value and the temporal change in a second grid parameter value over time exceeds a predefined second change threshold value, and
- the second control unit (21, 21i) and/or the superordinate control device (31) are/is adapted to identify the grid disturbance of the second type if the temporal change in the first grid parameter value over time exceeds the predefined first change threshold value and/or the temporal change in the second grid parameter value over time exceeds the predefined second change threshold value.

6. Arrangement (1) according to one of the preceding claims, **characterized in that**
- the second control unit (21, 21i) or the superordinate control device (31) is adapted to identify a grid disturbance of a third type if the deviation of the grid frequency from the setpoint grid frequency exceeds a predefined deviation threshold value and
- the second control unit (21, 21i) is adapted to feed an active current into the power supply grid (2) from the energy store (20b) via the converter (20a), the amplitude of said active current depending on the deviation of the grid frequency from the setpoint grid frequency, in the event of a grid disturbance of the third type.

7. Arrangement (1) according to one of the preceding claims, **characterized in that**
- the first grid parameter value is a grid voltage value (U) which indicates the respective grid voltage of the power supply grid (2), and/or
- the second grid parameter value is a frequency value (f) which indicates the respective grid frequency of the power supply grid (2).

8. Arrangement (1) according to one of the preceding claims, **characterized in that**
- a control device (31) is superordinate to the first and second control units (11, 11i, 21, 21i) and
- the control device (31) is adapted to control the first and second control units (11, 11i, 21, 21i) on the basis of at least the first and/or second grid parameter value.

9. Arrangement (1) according to one of the preceding claims, **characterized in that**
- the first control unit (11), the second control unit (21) and the superordinate control device (31) are separate physical units, wherein the superordinate control device (31) is connected to the first and second control units (11, 21), or
- the first control unit (11i) and the second control unit (21i) are constituent parts of a superordinate control device (31) .

10. Method for stabilizing an electrical power supply grid (2),
**characterized in that**
- a check is performed as to whether a grid disturbance of a predefined first type is present,
- in the event that a grid disturbance of the first type is identified, a first device (10) which has a rotating mass and, during normal operation of the power supply grid (2), rotates together with said rotating mass in sync with a setpoint grid frequency of the power supply grid (2), automatically feeds a current into the power supply grid (2) in the event of a short circuit in the power supply grid (2), and automatically adjusts its rotational speed in the event that the grid frequency deviates from the setpoint grid frequency, is controlled in such a way that said first device feeds reactive power (Q) into the power supply grid (2),
- in the event that a grid disturbance of the first type is identified, a second device (20) which has a converter (20a) and an energy store (20b) is controlled in such a way that said second device feeds reactive power (Q), in particular the maximum possible reactive power (Q), into the power supply grid (2) from the converter (20a), and
- the second device (20) additionally feeds reactive power (Q) into the power supply grid (2) from the energy store (20b) via the converter (20a) if the reactive power (Q) fed into the power supply grid (2) by the first device (10) corresponds to the nominal reactive power (Qn) thereof.

## Revendications

1. Installation (1) de stabilisation d'un réseau (2) d'alimentation en énergie électrique, dans laquelle
- l'installation (1) comprend un premier dispositif (10), qui a une masse tournante et qui, en fonctionnement normal du réseau (2) d'alimentation en énergie, tourne en synchronisme avec une fréquence de consigne du réseau (2) d'alimentation en énergie, dans le cas d'un court-circuit dans le circuit (2) d'alimentation en énergie, injecte automatiquement un courant dans le réseau (2) d'alimentation en énergie et, dans le cas d'un écart de la fréquence (f) du réseau (2) d'alimentation en énergie à la fréquence de consigne du réseau adapte, automatiquement sa vitesse de rotation, et
- l'installation (1) a une première unité (11, 11i) de commande, qui est raccordée au premier dispositif (10) et qui est adaptée pour, dans le cas d'une perturbation constatée du réseau d'un premier type donné à l'avance, commander le premier dispositif (10) et provoquer ainsi une injection de puissance réactive dans le réseau (2) d'alimentation en énergie par le premier dispositif (10),
**caractérisée en ce que**
- l'installation (1) comprend une deuxième unité (21, 21i) de commande et un deuxième dispositif (20), qui comporte un convertisseur (20a) et un accumulateur (20b) d'énergie et qui est commandé par la deuxième unité (21, 21i) de commande,
- dans laquelle la deuxième unité (21, 21i) de commande est adaptée pour, dans le cas d'une perturbation constatée du réseau du premier type, commander le convertisseur (20a) de manière à ce que celui-ci injecte de la puissance (Q) réactive, en particulier la puissance (Q) réactive possible au maximum, du convertisseur (20a) dans le réseau (2) d'alimentation en énergie,
- dans laquelle la deuxième unité (21, 21i) de commande est adaptée en outre pour injecter à partir de l'accumulateur (20b) d'énergie par l'intermédiaire du convertisseur (20a) de la puissance (Q) réactive dans le réseau (2) d'alimentation en énergie, si la puissance (Q) réactive injectée par le premier dispositif (10) dans le réseau (2) d'alimentation en énergie correspond à sa puissance (Qn) réactive nominale.

2. Installation (1) suivant la revendication 1,
**caractérisée en ce que**
la première unité (11, 11i) de commande est adaptée pour, dans le cas d'une perturbation constatée du réseau du premier type, appliquer une tension d'excitation au premier dispositif (10) et provoquer ainsi l'injection de puissance réactive par le premier dispositif (10).

3. Installation (1) suivant l'une des revendications précédentes,
**caractérisée en ce que**
la première unité (11, 11i) de commande, la deuxième unité (21, 21i) de commande et/ou un dispositif (31) de commande supérieur hiérarchiquement sont adaptés pour constater une perturbation du réseau du premier type, si une première valeur de paramètre du réseau dépasse une première valeur limite donnée à l'avance ou se trouve en dehors d'une première plage de tolérance donnée à l'avance.

4. Installation (1) suivant l'une des revendications précédentes,
**caractérisée en ce que**
la deuxième unité (21, 21i) de commande est adaptée pour, dans le cas d'une perturbation constatée du réseau du deuxième type, injecter à partir de l'accumulateur (20b) d'énergie par l'intermédiaire du convertisseur (20a) un courant actif possible au maximum dans le réseau (2) d'alimentation en énergie.

5. Installation (1) suivant l'une des revendications précédentes,
**caractérisée en ce que**
- la deuxième unité (21, 21i) de commande et/ou le dispositif (31) de commande supérieure hiérarchiquement est adapté pour contrôler si la variation en fonction du temps de la première valeur du paramètre du réseau dépasse en fonction du temps une première valeur de seuil de variation donnée à l'avance et si la variation en fonction du temps d'un deuxième paramètre de deuxième valeur de paramètre du réseau dépasse en fonction du temps une deuxième valeur de seuil de variation donnée à l'avance, et
- la deuxième unité (21, 21i) de commande et/ou le dispositif (31) de commande supérieure hiérarchiquement est adapté pour constater la perturbation du réseau du deuxième type, si la variation en fonction du temps de la première valeur de paramètre du réseau dépasse en fonction du temps la première valeur de seuil de variation donnée à l'avance et/ou si la variation en fonction du temps de la deuxième valeur de paramètre du réseau dépasse en fonction du temps la deuxième valeur de seuil de variation donnée à l'avance.

6. Installation (1) suivant l'une des revendications précédentes,
**caractérisée en ce que**
- la deuxième unité (21, 21i) de commande et/ou le dispositif (31) de commande supérieure hiérarchiquement est adapté pour constater une perturbation du réseau d'un troisième type, si l'écart de la fréquence du réseau à la fréquence de consigne du réseau dépasse une valeur de seuil d'écart donnée à l'avance et
- la deuxième unité (21, 21i) de commande est adaptée pour, dans le cas d'une perturbation du réseau du troisième type, injecter à partir de l'accumulateur (20b) d'énergie par l'intermédiaire du convertisseur (20a) un courant actif dans le réseau (2) d'alimentation en énergie, dont le niveau dépend de l'écart de la fréquence du réseau à la fréquence de consigne du réseau.

7. Installation (1) suivant l'une des revendications précédentes,
**caractérisée en ce que**
- la première valeur de paramètre du réseau est une valeur (U) de tension du réseau, qui indique la tension respective du réseau (2) d'alimentation en énergie, et/ou
- la deuxième valeur de paramètre du réseau est une valeur (f) de fréquence, qui indique la fréquence respective du réseau (2) d'alimentation en énergie.

8. Installation (1) suivant l'une des revendications précédentes,
**caractérisée en ce que**
- un dispositif (31) de commande est supérieur hiérarchiquement à la première et à la deuxième unités (11, 11i, 21, 21i) de commande et
- le dispositif (31) de commande est adapté pour effectuer la commande de la première et la deuxième unités (11, 11i, 21, 21i) de commande en fonction d'au moins la première et/ou la deuxième valeur de paramètre de réseau.

9. Installation (1) suivant l'une des revendications précédentes,
**caractérisée en ce que**
- la première unité (11) de commande, la deuxième unité (21) de commande et le dispositif (31) de commande supérieur hiérarchiquement sont des unités de construction distinctes, dans lequel le dispositif (31) de commande supérieur hiérarchiquement est relié à la première et à la deuxième unité (11, 21) de commande, ou
- la première unité (11i) de commande et la deuxième unité (21i) de commande sont des parties constitutives d'un dispositif (31) de commande supérieure hiérarchiquement.

10. Procédé de stabilisation d'un réseau (2) d'alimentation en énergie électrique,
**caractérisé en ce que**
- on contrôle s'il y a une perturbation du réseau d'un premier type donné à l'avance,
- dans le cas d'une perturbation constatée du réseau du premier type, on commande un premier dispositif (10), qui a une masse tournante et qui, en fonctionnement normal du réseau (2) d'alimentation en énergie, tourne en synchronisme avec une fréquence de consigne du réseau (2) d'alimentation en énergie, dans le cas d'un court-circuit dans le réseau (2) d'alimentation en énergie, injecte automatiquement un courant dans le réseau (2) d'alimentation en énergie et, dans le cas d'un écart de la fréquence de réseau à la fréquence de consigne, adapte automatiquement sa vitesse de rotation de manière à ce que celui-ci injecte de la puisse (Q) réactive dans le réseau (2) d'alimentation en énergie,
- dans le cas d'une perturbation constatée du réseau du premier type, on commande un deuxième dispositif (20), qui a un convertisseur (20a) et un accumulateur (20b) d'énergie de manière à ce que celui-ci injecte de la puissance (Q) réactive, en particulier la puissance (Q) réactive possible au maximum, à partir du convertisseur (20a) dans le réseau (2) d'alimentation en énergie, et
- le deuxième dispositif (20) injecte en outre à partir de l'accumulateur (20b) d'énergie par l'intermédiaire du convertisseur (20a) de la puissance (Q) réactive dans le réseau (2) d'alimentation en énergie, si la puissance (Q) réactive injectée par le premier dispositif (10) dans le réseau (2) d'alimentation en énergie correspond à sa puissance (Qn) réactive nominale.
